# EUROPÄISCHE PATENTSCHRIFT

(11) **EP 0 689 569 B1**
(45) Veröffentlichungstag und Bekanntmachung des Hinweises auf die Patenterteilung: **21.05.1997**
(21) Anmeldenummer: 94914256.6
(22) Anmeldetag: 15.03.1994
(51) Int. Cl.: C09D 5/44, C08C 19/36

(54) **KATHODISCH ABSCHEIDBARE, POLYBUTADIEN-PFROPFCOPOLYMERISATE ENTHALTENDE LACKBINDEMITTEL**
CATHODICALLY PRECIPITABLE LACQUER BINDING AGENTS CONTAINING POLYBUTADIENE GRAFT POLYMERS
LIANTS POUR PEINTURE A PRECIPITATION CATHODIQUE, CONTENANT DES POLYMERES GREFFES DE POLYBUTADIENE

(30) Priorität: 16.03.1993 DE 4308386
(43) Veröffentlichungstag der Anmeldung: 03.01.1996
(73) Patentinhaber: Vianova Resins AG, 8402 Werndorf (AT)
(72) Erfinder: PAAR, Willibald, A-8010 Graz (AT); KRIESSMANN, Ingo, A-8010 Graz (AT); SCHIPFER, Rudolf, A-8010 Graz (AT); SCHMÖLZER, Gerhard, A-8010 Graz (AT); KLEIN, Klausjörg, D-42289 Wuppertal (DE)
(86) Internationale Anmeldenummer: AT9400027
(87) Internationale Veröffentlichungsnummer: WO9421735

(56) Entgegenhaltungen:
- EP-A- 0 043 935
- EP-A- 0 465 672
- DE-A- 2 553 593
- FR-A- 2 359 158
- FR-A- 2 371 496

## Beschreibung

Die Erfindung betrifft kathodisch abscheidbare Lackbindemittel, insbesonders für die Formulierung von pigmentfreien Komponenten in 2-Komponenten-Lacken für die Elektrotauchlackierung, welche als wesentliche Teilkomponente ein kationische Gruppen aufweisendes Polybutadien-Pfropfcopolymerisat enthalten.

Die in der Automobilindustrie verwendeten kathodisch abscheidbaren Tauchlacke haben bereits einen sehr guten Qualitätsstandard erreicht, doch werden von den Konsumenten immer noch höhere Anforderungen an die gesamte Lackierung und somit auch an die Grundierung eines Automobils gestellt. Vor allem die mechanische Belastbarkeit der Lackierung, besonders durch die Einwirkung von Streusplitt, und die Korrosionsbeständigkeit an den Blechkanten werden weiterhin bemängelt.

Es wurde nun gefunden, daß kathodisch abscheidbare Tauchlacke mit einem in der großtechnischen Anwendung verbesserten Eigenschaftsprofil erhalten werden, wenn die pigmentfreie Komponente (Klarlack-Komponente) von 2-Komponentenlacken für die Elektrotauchlackierung als zusätzliche Komponente ein Polybutadien-Pfropfcopolymerisat enthält.

Die Erfindung betrifft demgemäß kathodisch abscheidbare Lackbindemittel, insbesonders für die Formulierung von pigmentfreien Komponenten in 2-Komponenten-Lacken für die Elektrotauchlackierung, bestehend (jeweils bezogen auf den Feststoffgehalt) aus
- 50 bis 95: Gew.-% einer pigmentfreien Teilkomponente (A)
und
- 5 bis 50: Gew.-% einer pigmentfreien Teilkomponente (B), welche erhalten wurde
(B1) durch Umsetzung eines Addukts von Maleinsäureanhydrid (MSA) und Polybutadienöl (PB), welches ein MSA : PB - Verhältnis in Gewichtseinheiten von 1 : 4 bis 1 : 15 aufweist, mit primär-tertiären aliphatischen Diaminen zu einem carboxylgruppenfreien Aminoimid mit einer Aminzahl von 30 bis 100 mg KOH/g,
(B2) durch zumindest teilweise Neutralisation des Aminoimids (B1) mit einer organischen oder anorganischen Säure, vorzugsweise mit Ameisensäure oder Essigsäure, und anschließender Herstellung einer entsprechenden wäßrigen Lösung oder vorzugsweise Emulsion
und
(B3) durch Pfropfung des Zwischenprodukts (B2) mittels radikalischer Copolymerisation mit
(B3/1) bis zu 50 Gew.-% an Vinylmonomeren mit einer reaktiven Doppelbindung und
(B3/2) bis zu 5 Gew.-% an Estern der (Meth)acrylsäure mit Di- und Polyolen,
wobei das Endprodukt ein mittleres Molekulargewicht (Gewichtsmittel) von mindestens 10 000, vorzugsweise von 20 000 bis 80 000, aufweist, die Summe der Gewichtsprozente bei den Teilkomponenten (A) und (B) immer 100 ergeben muß und die Angaben der Gewichtsprozente bei (B3/1) und (B3/2) sich auf 100 Teile des Zwischenprodukts (B2) als Feststoff beziehen.

Die für die Formulierung von kathodisch abscheidbaren Tauchlacken verwendbaren Lackbindemittel, einschließlich der Teilkomponente (A), sind in großer Zahl aus der Literatur bekannt und auf dem Markt verfügbar. Für die Kombination mit dem Polybutadien-Pfropfcopolymerisat (B) eignen sich vor allem die für Tauchgrundierungen eingesetzten Bindemittel, wobei die Rohstoffbasis von untergeordneter Bedeutung ist, soferne eine ausreichende Verträglichkeit der Bindemittel bei der Lagerung der Lacke und während der Filmbildung gegeben ist.

Zur Herstellung der Teilkomponente (B) wird als Ausgangsprodukt ein in bekannter Weise erhaltenes Addukt von Maleinsäureanhydrid (MSA) und Polybutadienöl (PB) verwendet, wobei letzteres eine mittlere Molmasse von 500 bis 5000 aufweist und gegebenenfalls auch Pentadiene enthält.

Die Anhydridgruppen des Addukts, in welchem MSA und PB in einem Verhältnis in Gewichtseinheiten von 1 : 4 bis 1 : 15 vorliegen, werden mit Monoalkoholen, vorzugsweise mit Methanol, geöffnet. Anschließend werden die Carboxylgruppen mit primär-tertiären aliphatischen Diaminen zu einem carboxylgruppenfreien Reaktionsprodukt mit einer Aminzahl von 30 bis 100 mg KOH/g umgesetzt. Gegebenenfalls wird das MSA/PB-Addukt direkt mit dem Diamin zur Reaktion gebracht.

Als Amine werden beispielsweise N,N-Dialkylaminoalkylamine, wie 3-Dimethylamino- oder 3-Diethylamino-1-propylamin, eingesetzt.

Die Addukte werden gegebenenfalls mit wassertoleranten Lösemitteln, wie mit Glykolethern, auf einen für die weitere Verarbeitung günstigen Feststoffgehalt verdünnt.

Die so erhaltenen Aminoimide (B1) werden zumindestens anteilig mit einer organischen oder anorganischen Säure neutralisiert. Vorzugsweise erfolgt die Neutralisation mit Ameisensäure oder Essigsäure. Gegebenenfalls können auch Milchsäure oder Phosphorsäure verwendet werden.

Durch Zugabe von Wasser wird das Produkt in eine wäßrige Lösung oder vorzugsweise in eine Emulsion übergeführt. Die Protonisierung und Verdünnung kann auch gleichzeitig erfolgen. Der Feststoffgehalt dieses Zwischenprodukts (B2) beträgt 20 - 40 Gew.-%.

Die Pfropfung des Zwischenprodukts (B2) mittels radikalischer Copolymerisation mit bis zu 50 Gew.-% an Vinylmonomeren mit einer reaktiven Doppelbindung, wie (Meth)acrylsäureestern oder Styrol, und mit bis zu 5 Gew.-% an Estern der (Meth)acrylsäure mit Di- und Polyolen, beispielsweise mit Butandioldiacrylat, Hexandioldiacrylat, Trimethylolpropantrilmeth)acrylat oder Pentaerythrittrimethacrylat, erfolgt in ebenfalls bekannter Weise, wobei sich die Angaben der Gewichtsprozente auf 100 Teile des Zwischenprodukts (B2) als Feststoff beziehen.

Gegebenenfalls wird das Aminoimid (B1) zuerst einer Pfropfreaktion mit den Vinylmonomeren (B3/1) und (B3/2) unterworfen und das auf diese Weise erhaltene Pfropfcopolymerisat (C2) anschließend neutralisiert und in eine wäßrige Lösung oder vorzugsweise in eine Emulsion übergeführt.

Es ist zweckmäßig, das Polybutadien-Pfropfcopolymerisat (B) der verdünnten pigmentfreien Teilkomponente (A) in Anteilen von 5 bis 50 Gew.-% (bezogen auf den jeweiligen Feststoffgehalt) zuzugeben, wobei die Summe der Gewichtsprozente bei den Teilkomponenten (A) und (B) immer 100 ergeben muß.

Die Formulierung von kathodisch abscheidbaren Tauchlacken scwie deren Anwendung sind dem Fachmann bekannt und in der Literatur beschrieben.

Das folgende Beispiel erläutert die Erfindung, ohne sie in ihrem Umfang zu beschränken. Alle Angaben in Teilen oder Prozenten beziehen sich, soferne nichts anderes angegeben ist, auf Gewichtseinheiten.

### Herstellung des Aminoimids (B1)

In einem geeigneten Reaktionsgefäß werden 1400 Tle eines flüssigen Polybutadiens mit einer mittleren Molmasse von ca. 3000 (POLYOEL B 180, HULS AG, DE) mit 200 Tlen Maleinsäureanhydrid in Gegenwart von 2 Tlen N,N'-Diphenyl-p-phenylendiamin als Inhibitor unter Schutzgas bei 180 bis 210°C umgesetzt, bis kein freies Maleinsäureanhydrid mehr nachweisbar ist. Nach Kühlung auf 60°C werden 70 Tle Methanol während 30 min zugetropft. Die Temperatur wird gehalten, bis eine Säurezahl von ca. 70 mg KOH/g erreicht ist. Anschließend werden bei 65°C während 60 min 260 Tle 3-Diethylamino-1-propylamin zugegeben. Die Temperatur wird auf 160°C erhöht und so lange gehalten, bis kein Destillat mehr entsteht und die Säurezahl unter 2 mg KOH/g gesunken ist. Nach Kühlung auf ca. 100°C wird mit Methoxypropanol auf einen Festkörpergehalt von 80 % verdünnt. Das Produkt weist eine Aminzahl von 60 mg KOH/g auf.

### Herstellung der Emulsion (B2)

1000 Tle der Lösung des Aminoimids (B1) werden unter Rühren einer Mischung aus 2400 Tlen deionisiertem Wasser und 39,2 Tlen Ameisensäure (100%ig) langsam zugegeben. Nach einer weiteren Stunde Rühren resultiert eine bräunliche homogene Emulsion mit einem Festkörpergehalt von 23,3 %, einem pH-Wert von 3,7 und einem Säure-MEQ von 106 mMol HCOOH / 100 g Feststoff.

### Herstellung des Pfropfcopolymerisats (B3)

344 Tle der Emulsion (B2) werden in einem Reaktionsgefäß mit Rückflußkühler, Stickstoffspülung und Zulaufgefäß unter Rühren mit 36 Tlen deionisiertem Wasser versetzt und auf 80°C erwärmt. Dazu wird bei 80°C eine Mischung aus 40 Tlen Styrol, 2 Tlen Trimethylolpropantrimethacrylat und 2 Tlen Azobisisovaleronitril während 6 Stunden kontinuierlich zugegeben. Anschließend wird bei 85°C ca. 4 Stunden nachreagiert, bis ein Festkörpergehalt von mind. 29 % erreicht ist.

Das Endprodukt weist folgende Kennzahlen auf:

| | |
|---|---|
| Festkörpergehalt | 29,3 % |
| Aminzahl | 46 mg KOH/g |
| Säure-MEQ | 75 mMol HCOOH / 100 g Feststoff |
| mittleres MG | ca. 50 000 |
| (Gewichtsmittel) | |

### Herstellung und Prüfung einer kathodisch abscheidbaren pigmentfreien (Klarlack-)Komponente

100 Tle (Festharz) eines KTL-Bindemittels (siehe unten) werden in einen wäßrigen Klarlack mit einem Festkörpergehalt von 15 % übergeführt. Nach Zugabe von 30 Tlen (Festharz) des gemäß Beispiel hergestellten Pfropfcopolymerisats (B3) wird der Lack 24 Stunden homogenisiert.

Ein auf zinkphosphatiertem Stahlblech kathodisch abgeschiedener Film wurde 15 min bei 200°C eingebrannt.

| | |
|---|---|
| Trockenfilmstärke | 25 µm |
| Aussehen | kraterfreie, glatte Oberfläche |
| Schlagprüfung | 80 inch/pound, in Ordnung |
| (bei -40°C) | |
| Salzsprühtest | 1500 Stunden ohne Angriff |
| (ASTM B 117-90) | |

Ein in gleicher Weise abgeschiedener und eingebrannter Lack, ohne Verwendung der Zusatzkomponente ergab folgende Prüfwerte:

| | |
|---|---|
| Trockenfilmstärke | 25 µm |
| Aussehen | 5 Krater pro 100 cm² Fläche, sonst glatte Oberfläche |
| Schlagprüfung | unter 10 inch/pound, in Ordnung |
| (bei -40°C) | |
| Salzsprühtest | 1000 Stunden: in Ordnung |
| (ASTM B 117-90) | 1500 Stunden: 4 mm Angriff |

Als Basisbindemittel für den Klarlack wurde ein Harz gemäß Beispiel 1 der EP 0 209 857 B1 eingesetzt, welches auf folgendem Weg erhalten wurde:

In einem geeigneten Reaktionsgefäß werden 220 Tle Nonylphenol (1 Mol) mit 130 Tlen Diethylaminopropylamin (1 Mol) und 100 Tlen Toluol auf 75°C erwärmt und dem Ansatz anschließend unter leichtem Kühlen 33 Tle Paraformaldehyd 91 % (1 Mol) zugefügt. Die Temperatur wird langsam gesteigert, bis sich eine zügige azeotrope Destillation einstellt. Nach Abtrennen von 21 Tlen Reaktionswasser wird das Toluol im Vakuum abdestilliert und das Produkt in 167 Tlen Diethylenglykoldimethylether gelöst.

Die so erhaltene Lösung wird bei 30 bis 40°C unter Kühlung mit 304 Tlen (1,0 Mol) eines mit 2-Ethylhexanol halbblockierten Toluylendiisocyanats versetzt und die Temperatur von 40°C wird 1,5 Stunden bis zu einem NCO-Wert von praktisch 0 gehalten.

Anschließend werden 475 Tle eines Epoxidharzes auf Basis von Bisphenol A (Epoxidäquivalentgewicht 475) in 200 Tlen Propylenglykolmonomethylether gelöst und nach Zusatz von 835 Tlen des oben hergestellten Vorprodukts bei 95 bis 100°C bis zu einem Epoxidwert von praktisch 0 reagiert. Das Endprodukt ist nach Zusatz von 50 Millimol Ameisensäure pro 100 g Festharz einwandfrei wasserverdünnbar.

## Patentansprüche

1. Kathodisch abscheidbare Lackbindemittel, insbesonders für die Formulierung von pigment freien Komponenten in 2-Komponenten-Lacken für die Elektrotauchlackierung, bestehend (jeweils bezogen auf den Feststoffgehalt) aus
50 bis 95 Gew.-% einer pigmentfreien Teilkomponente (A)
und
5 bis 50 Gew.-% einer pigmentfreien Teilkomponente (B), welche erhalten wurde
(B1) durch Umsetzung eines Addukts von Maleinsäureanhydrid (MSA) und Polybutadienöl (PB), welches ein MSA : PB - Verhältnis in Gewichtseinheiten von 1 : 4 bis 1 : 15 aufweist, mit primär-tertiären aliphatischen Diaminen zu einem carboxylgruppenfreien Aminoimid mit einer Aminzahl von 30 bis 100 mg KOH/g,
(B2) durch zumindest teilweise Neutralisation des Aminoimids (B1) mit einer organischen oder anorganischen Säure, vorzugsweise mit Ameisensäure oder Essigsäure, und anschließender Herstellung einer entsprechenden wäßrigen Lösung oder vorzugsweise Emulsion
und
(B3) durch Pfropfung des Zwischenprodukts (B2) mittels radikalischer Copolymerisation mit
(B3/1) bis zu 50 Gew.-% an Vinylmonomeren mit einer reaktiven Doppelbindung
und
(B3/2) bis zu 5 Gew.-% an Estern der (Meth)acrylsäure mit Di- und Polyolen,
wobei das Endprodukt ein mittleres Molekulargewicht (Gewichtsmittel) von mindestens 10 000, vorzugsweise von 20 000 bis 80 000, aufweist, die Summe der Gewichtsprozente bei den Teilkomponenten (A) und (B) immer 100 ergeben muß und die Angaben der Gewichtsprozente bei (B3/1) und (B3/2) sich auf 100 Teile des Zwischenprodukts (B2) als Feststoff beziehen.

2. Kathodisch abscheidbare Lackbindemittel gemäß Anspruch 1, dadurch gekennzeichnet, daß die Teilkomponente (B) durch Pfropfung des Aminoimids (B1) gemäß Verfahrensschritt (B3) und durch anschließende Neutralisation des Pfropfcopolymerisats (C2) sowie Herstellung einer entsprechenden wäßrigen Lösung oder vorzugsweise Emulsion gemäß Verfahrensschritt (B2) erhalten wurde.

## Claims

1. Cathodically depositable coating binders, in particular for the formulation of pigment-free components in 2-component coating materials for electrodeposition coating, comprising (based in each case on the solids content)
from 50 to 95 % by weight of a pigment-free co-component (A)
and
from 5 to 50 % by weight of a pigment-free co-component (B) which has been obtained
(B1) by reaction of an adduct of maleic anhydride (MAA) and polybutadiene oil (PB), which has an MAA : PB ratio in units by weight of from 1 : 4 to 1 : 15, with primary-tertiary aliphatic diamines to give a carboxyl-free amino imide having an amine number of from 30 to 100 mg of KOH/g,
(B2) by at least partial neutralization of the amino imide (B1) with an organic or inorganic acid, preferably with formic acid or acetic acid, and subsequent preparation of an appropriate aqueous solution or, preferably, emulsion
and
(B3) by grafting of the intermediate (B2) by means of free-radical copolymerization with
(B3/1) up to 50% by weight of vinyl monomers having a reactive double bond and
(B3/2) up to 5% by weight of esters of (meth)acrylic acid with di- and polyols,
the end product having an average molecular weight (weight-average) of at least 10,000, preferably from 20,000 to 80,000, the sum of the percentages by weight of the co-components (A) and (B) necessarily always being 100 and the statements of the percentages by weight in the case of (B3/1) and (B3/2) relating to 100 parts of the intermediate (B2) as solid.

2. Cathodically depositable coating binders according to claim 1, characterized in that the co-component (B) has been obtained by grafting of the amino imide (B1) according to process step (B3) and by subsequent neutralization of the graft copolymer (C2) and preparation of an appropriate aqueous solution or, preferably, emulsion according to process step (B2).

## Revendications

1. Liants pour peintures déposables cathodiquement, en particulier pour la formulation de composants exempts de pigments dans des peintures à 2 composants pour le trempage électrophorétique, consistant (dans chaque cas par rapport à la teneur en solides) en
50 à 95% en masse d'un composant partiel exempt de pigment (A)
et en
5 à 50% en masse d'un composant partiel exempt de pigment (B) qui a été obtenu
(B1) par réaction d'un produit d'addition d'anhydride maléique (AM) et d'huile de polybutadiène (PB), qui présente un rapport AM:PB en unités massiques de 1:4 à 1:15, avec des diamines aliphatiques primaires-tertiaires pour former un amino-imide exempt de groupes carboxyle ayant un indice d'amine de 30 à 100 mg de KOH/g,
(B2) par neutralisation au moins partielle de l'amino-imide (B1) avec un acide organique ou inorganique, de préférence avec l'acide formique ou l'acide acétique, et préparation subséquente d'une solution aqueuse ou de préférence d'une émulsion correspondante
et
(B3) par greffage du produit intermédiaire (B2) par copolymérisation radicalaire avec
(B3/1) jusqu'à 50% en masse de monomères vinyliques ayant une double liaison réactive
et
(B3/2) jusqu'à 5% en masse d'esters de l'acide (méth)acrylique avec des di- et polyols,
le produit final présentant une masse moléculaire moyenne (moyenne en poids) d'au moins 10000, de préférence de 20000 à 80000, la somme des pourcentages massiques concernant les composants partiels (A) et (B) devant toujours donner 100 et les indications de pourcentages massiques concernant (B3/1) et (B3/2) se rapportant à 100 parties du produit intermédiaire (B2) sous forme de solide.

2. Liants pour peintures déposables cathodiquement selon la revendication 1, caractérisés en ce que le composant partiel (B) a été obtenu par greffage de l'amino-imide (B1) selon l'étape de procédé (B3) et par neutralisation subséquente du produit de copolymérisation par greffage (C2) ainsi que par préparation d'une solution aqueuse ou de préférence d'une émulsion correspondante selon l'étape de procédé (B2).
